# EUROPEAN PATENT SPECIFICATION

(11) **EP 3 738 227 B1**
(45) Date of publication and mention of the grant of the patent: **21.05.2025**
(21) Application number: 18707648.4
(22) Date of filing: 14.02.2018
(51) Int. Cl.: H04B 10/70, H04L 9/08, H04J 14/02

(54) **TRANSMITTER AND RECEIVER FOR QUANTUM KEY DISTRIBUTION**
SENDER UND EMPFÄNGER FÜR QUANTENSCHLÜSSELVERTEILUNG
ÉMETTEUR ET RÉCEPTEUR POUR LA DISTRIBUTION DE CLÉS QUANTIQUES

(43) Date of publication of application: 18.11.2020
(73) Proprietor: Huawei Technologies Duesseldorf GmbH, 40549 Düsseldorf (DE)
(72) Inventor: HILLERKUSS, David, 80992 Munich (DE); COMANDAR, Lucian, 80992 Munich (DE); FUNG, Fred, Chi, Hang, 80992 Munich (DE); CANO VALADEZ, Ivan Nicolas, 80992 Munich (DE)
(74) Representative: Roth, Sebastian
(86) International application number: PCT/EP2018/053685
(87) International publication number: WO 2019/158195

(56) References cited:
- US-A1- 2007 212 063
- US-A1- 2014 341 575
- US-A1- 2016 234 018
- CHAPURAN T E ET AL: "Optical networking for quantum key distribution and quantum communications", NEW JOURNAL OF PHYSICS, INSTITUTE OF PHYSICS PUBLISHING, BRISTOL, GB, vol. 11, no. 10, 1 October 2009 (2009-10-01), pages 105001, XP020165437, ISSN: 1367-2630, DOI: 10.1088/1367-2630/11/10/105001

## Description

### TECHNICAL FIELD

The present disclosure relates to a transmitter and receiver for Quantum Key Distribution (QKD), i.e. to a QKD transmitter and a QKD receiver. The transmitter and receiver together can form a QKD system. Here in particular, the transmitter and receiver are configured to combine the transmission of a QKD signal (quantum signal) with the transmission of a classical optical signal on the same transmission line.

### BACKGROUND

Conventional QKD systems use separate hardware components to implement different aspects, which are necessary to build an encrypted communication link. This includes, among other things, the following components: a classical transmitter and receiver for exchanging a classical optical signal to establish a communication channel, encryptors/decryptors to establish an encrypted connection, a key management infrastructure to manage the keys, and a QKD transmitter and QKD receiver that exchange a QKD signal and generate random encryption keys at both locations.

US 2007/0212063 A1 describes a method for integrating an Optical Service Channel (OSC) with a Quantum Key Distribution (QKD) channel.

### SUMMARY

The present disclosure is based on the observation that as components in conventional QKD systems are typically at least 3-4 in number, the conventional QKD system becomes difficult to assemble and maintain. Also, there is a significant risk of human error during setup, configuration, and maintenance of the conventional QKD system.

In addition, if a transmission line like a fiber or freespace transmission link is to be shared by the classical and QKD transmitters and receivers, respectively, additional WDM multiplexers and demultiplexers need to be used and significantly increase the loss of the QKD signal. The loss severely decreases the transmission distance over which the QKD can be performed.

In view of the above-mentioned problems and disadvantages, the present disclosure aims to improve the conventional QKD systems, particularly QKD transmitters and receivers used in such systems. In particular, it is an object to allow for a low complexity and cost efficient implementation of a QKD transmitter, QKD receiver and thus QKD system, in which the QKD is combined with classical communication, i.e. the transmission of a QKD signal is combined with the transmission of a classical optical signal. The QKD transmitter, receiver and system should be suited for secure short reach communication applications like data center interconnects. The transmission link for the classical optical signal and the QKD signal should be implemented in a single device, ideally using the same hardware (e.g. ASIC, optics, etc.) for classical signal processing, QKD, key management, and encryption. In this way, a reduction of the risk for a successful active attack or for human error during the configuration and handling of the QKD system is obtained. In addition the QKD system as a whole is further improved, the number of components decreased, and the loss that is experienced by the QKD signal reduced.

The above object is achieved by the solution provided in the enclosed independent claims. Advantageous implementations of the present invention are further defined in the dependent claims.

In particular it is proposed to combine hardware of QKD transmitters/receivers with at least parts of classical transmitters/receivers in a single device or system. In this way, a QKD system can be optimized, in particular by improving security, reducing complexity, and maximizing QKD reach. All processing related to QKD, key handling and data encryption may be combined in one processing unit (e.g. ASIC, FPGA, DSP, processor, etc.).

The present invention is defined by transmitter for QKD according to independent claim 1, receiver for QKD according to independent claim 4 and system for QKD according to independent claim 6. Additional features of the invention are provided in the dependent claims. In the following, parts of the description and drawings referring to embodiments which are not covered by the claims are not presented as embodiments of the invention, but as examples useful for understanding the invention

A first aspect of an explicative embodiment provides a transmitter for QKD, the transmitter comprising a signal generation unit configured to generate a QKD signal and to output it onto a transmission line, and an input configured to receive an optical signal having a different wavelength than the QKD signal, the optical signal being output onto the transmission line, wherein between the input and the transmission line the optical signal is passed through a part of the signal generation unit, which is transparent to the optical signal, wherein at least one of: the signal generation unit includes a wavelength-selective attenuator configured to attenuate the QKD signal, and the optical signal is passed through the attenuator, which is transparent to the optical signal; and the signal generation unit includes an optical modulation unit configured to modulate a laser beam to generate the QKD signal, and the optical signal is passed through the optical modulation unit, which is transparent to the optical signal, wherein the optical modulation unit includes a wavelength-selective interferometer configured to pass the laser beam through both of its arms but the optical signal only through one of its arms, and/or wherein the optical modulation unit includes a phase modulator and a wavelength-selective coupler, and the wavelength-selective coupler is configured to direct a first part of the laser beam to the phase modulator and to pass a second part of the laser beam and the optical signal by the phase modulator.

In this document, the 'optical signal' refers to a classical optical signal, i.e. to a non-quantum optical signal as it is used in standard optical telecommunication. 'Transparent' means that the optical signal passes through without being significantly affected. For instance, the optical signal passes undisturbed through the part of the signal generation unit, e.g. through optics provided in this part for affecting the QKD signal. With the term undisturbed it is meant in the present disclosure that the signal is only subject to negligible disturbances that do not impact the transmission performance, for example losses due to the optical path. In this disclosure we will refer to the above described property as a component or subsystem being transparent for the optical signal. Thus, the optical signal typically experiences a small power loss when passing thorough a transparent part or component. The wavelength difference between the (classical) optical signal and the QKD signal may be at least 100 nm for low cost implementations (large manufacturing tolerances, low loss, etc.). Especially for discrete variable QKD systems that rely on single photon detectors, the QKD signal has in any case a shorter wavelength than the classical optical signal. For continuous variable QKD systems, where the wavelength selectivity relies on the use of local oscillator, this condition is not required.

When using the QKD transmitter of the first aspect, for example to build a QKD system in which quantum and non-quantum signals are exchanged, the fragile QKD signal is not (or only minimally) affected, since no extra components (other than the components used for QKD) are needed for coupling the QKD signal and the optical signal before the transmission line. In particular, extra wavelength multiplexers in the path of the QKD signal can be avoided. In other words, the losses for the QKD signal in the transmitter are minimized, although the QKD signal and the optical signal are transmitted over the same transmission line. This significantly increases the reach for the QKD signal and/or allows higher QKD key rates.

The optical modulation unit may, for instance, include an interferometer with a phase modulator in one of its two arms and/or an attenuator. Since the optical modulation unit or optical modulator is transparent to the optical signal, the losses of the optical signal are minimized. Nevertheless, the optical signal can be coupled through the optical modulation unit towards the transmission line. A possible implementation of such an optical modulator may be realized as a Mach-Zehnder interferometer with, for instance, directional couplers, multimode interference (MMI) couplers or optical filters, which passes the classical optical signal only through one arm of the interferometer. Other interferometers, such as for instance Michelson interferometers, using the same principle may alternatively be used.

The interferometer acts as interferometer only on the laser beam for the QKD signal, but not on the classical optical signal. However, the interferometer may function to couple the optical signal towards the transmission line.

For instance, the optical modulation unit is a wavelength-selective interferometer with the phase modulator provided in/on one of its arms, and with the wavelength-selective coupler provided at the interferometer input. The coupler is used to split the laser beam between the two arms, while letting the optical signal pass undisturbed through the interferometer arm without the phase modulator. The wavelength-selective coupler thus simultaneously serves as a wavelength multiplexer and splitter for the QKD signal. Accordingly, no additional multiplexer is required, thus minimizing the QKD signal loss.

In a further implementation form of the first aspect, the wavelength-selective coupler is a directional coupler or a multimode interference coupler.

These coupler components may, for instance, output the optical signal at one output port, but split the QKD signal to two output ports. Further, these components are easy to implement and are cheap.

The QKD signal may selectively be attenuated to the quantum level, while the optical signal experiences only a small loss. This implementation form is of particular advantage when photonic integration is of interest.

In a further implementation form of the first aspect, the wavelength-selective attenuator is implemented with a semiconductor optical amplifier (SOA) or an electro absorption modulator (EAM).

The bandgap of the SOA or EAM can be easily selected such that the attenuator does not influence the optical signal used. In particular, the bandgap may be selected to be much larger than the energy that corresponds to the wavelength of the optical signal.

A second aspect of an explicative embodiment provides a receiver for QKD, the receiver comprising a signal receiving unit configured to receive a QKD signal and an optical signal over a transmission line, the optical signal having a different wavelength than the QKD signal and an output for the optical signal, wherein between the transmission line and the output, the optical signal is passed through a part of the signal receiving unit, which is transparent to the optical signal, and wherein at least one of: the signal receiving unit includes a wavelength-selective detecting unit configured to detect the QKD signal, and the optical signal is passed through at least a part of the detecting unit, which is transparent to the optical signal; and the signal receiving unit includes an optical demodulation unit configured to demodulate the QKD signal, and the optical signal is passed through the optical demodulation unit, which is transparent to the optical signal, wherein the optical demodulation unit includes a wavelength-selective interferometer configured to pass the QKD signal through both of its arms but the optical signal only through one of its arms, and/or wherein the optical demodulation unit includes a phase modulator and a wavelength-selective coupler, and the wavelength-selective coupler is configured to direct a first part of the QKD signal to the phase modulator and to pass a second part of the QKD signal and the optical signal by the phase modulator.

When using the QKD receiver of the second aspect, for example to build a QKD system in which quantum and non-quantum signals are exchanged, the QKD signal is not (or only minimally affected), since no extra components (other than the components used for the QKD signal) are needed for receiving and demultiplexing the QKD signal and optical signal coming from the transmission line. In particular, extra wavelength demultiplexers in the path of the QKD signal can be avoided. In other words, the losses for the QKD signal in the receiver are minimized, although the QKD signal and the optical signal are transmitted and received over the same transmission line. This significantly increases the reach for the QKD signal. Further, wavelength multiplexers and/or demultiplexers in the path of the QKD signal can be avoided.

The optical demodulation unit may, for instance, be an interferometer with a phase modulator in one of its arms. Since the optical demodulation unit is transparent to the optical signal, the losses of the optical signal are minimized. Nevertheless, the optical signal can be coupled through the optical demodulation unit into the receiver.

The interferometer acts as interferometer only on the laser beam for the QKD signal, but not on the classical optical signal. However, the interferometer may function to couple the optical signal into the transceiver, and even to decouple the QKD signal from the optical signal.

For instance, the optical demodulation unit is a wavelength-selective interferometer with the phase modulator provided in one of its arms, and with the wavelength-selective coupler provided at the interferometer input, in order to split the QKD signal between the two arms while letting the optical signal pass undisturbed through the arm without the phase modulator. The wavelength-selective coupler thus simultaneously serves as a wavelength multiplexer and splitter for the QKD signal.

In a further implementation form of the second aspect, the wavelength-selective detecting unit includes a detector stack made of a first detector, which is configured to detect the QKD signal but is transparent to the optical signal, and a second detector, which is configured to detect the optical signal.

Advantageously, the QKD signal is detected with high efficiency in the first detector, which may be a silicon (Si) avalanche photodiode (Si-APD) detector, while the classical optical signal passes through the Si-APD to be detected in the following second detector. The second detector may be an indium gallium arsenide (InGaAs) APD or a classical receiver. Since the first detector is for the QKD signal, and is in front of the second detector for the optical signal, the loss is minimized for the QKD signal. Further, no Wavelength-Division-Multiplexing (WDM) demultiplexer is needed that would introduce additional losses, since this task is also fulfilled by the detector stack.

A third aspect of an explicative embodiment provides a system for QKD, the system comprising a transmitter according to the first aspect or any of its implementation forms, and a receiver according to the second aspect or any of its implementation forms, wherein the transmitter and the receiver are connected over the transmission line.

The transmission line may be the one mentioned above for the receiver of the first aspect, or the one mentioned above for the receiver of the second aspect, or may include both of these transmission lines connected to another. The system of the third aspect achieves all the advantages of the transmitter and receiver, in particular a low complexity and cost efficient implementation of a QKD system that combines QKD with classical communication, i.e. combines the transmission of a QKD signal and a classical optical signal.

In an implementation form of the third aspect, the QKD signal has a shorter wavelength, for example of 800-1400 nm, and the optical signal has a longer wavelength, for example of 1200-1700 nm. This means for example, when the QKD signal e.g. has a wavelength of 850 nm suitable for shorter reaches, the wavelength of the classical signal can be chosen around e.g. 1300 nm or 1550 nm.

The wavelength ranges of the QKD signal depends on the transmission distance. The above-mentioned range is preferred for up to about 10 km of transmission line. For longer distances, a QKD signal in the range of 1300-1550 nm may also be used. The wavelength range for the optical signal depends of course on the wavelength of the QKD signal. In general, the gap between the wavelengths of the two signals should be at least 100 nm. In a second example, if the QKD signal has a wavelength of 1300 nm, the wavelength of the classical signal can be chosen e.g. around 1550 nm.

A fourth aspect of an explicative embodiment provides a transmission method for QKD, the method comprising generating, with a signal generation unit, a QKD signal and outputting it onto a transmission line, and receiving, with an input, an optical signal having a different wavelength than the QKD signal, and outputting the optical signal onto the transmission line, wherein between the input and the transmission line, the optical signal is passed through a part of the signal generation unit, which is transparent to the optical signal.

The method of the fourth aspect provides the same advantages and effects as the transmitter of the first aspect. Further, it can be developed with implementation forms according to the implementation forms of the first aspect.

A fifth aspect of an explicative embodiment provides a receiving method for QKD, the method comprising receiving, with a receiving unit, a QKD signal and an optical signal over a transmission line, the optical signal having a different wavelength than the QKD signal and outputting the optical signal via an output, wherein between the transmission line and the output, the optical signal is passed through a part of the signal receiving unit, which is transparent to the optical signal.

The method of the fifth aspect provides the same advantages and effects as the receiver of the second aspect. Further, it can be developed with implementation forms according to the implementation forms of the second aspect.

The fourth and the fifth aspect are not encompassed by the wording of the claims but are considered as useful for understanding the invention.

The aspects of the explicative embodiments allow all for the integration of the electronics for QKD, key management and encryption in one QKD system, thereby reducing possible attack vectors by any potential adversary that tries to gain physical access to the system. To access the key, an adversary would have to physically probe data within the processing device (ideally an ASIC). Further, the aspects of the present invention all allow for optimization of the QKD system, particularly for minimal QKD signal excess loss in both transmitter and receiver. In the QKD receiver this is especially important as the loss reduction there directly translates into additional link budget or higher key rates. In addition, the aspect of the present invention allow for joint optimization or even photonic integration, paving the way for small form-factors and low cost. Notably, one or both of the transmitter and receiver of the invention may be implemented as transceiver(s).

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: shows a transmitter according to an embodiment.
- FIG. 2: shows a receiver according to an embodiment.
- FIG. 3: shows a system according to an embodiment of the present invention including a transmitter and receiver according to embodiment.
- FIG. 4: shows a system including a receiver according to an embodiment.
- FIG. 5: shows different components used in a system according to an embodiment.
- FIG. 6: shows different components used in a system according to an embodiment.

### DETAILED DESCRIPTION OF EMBODIMENTS

The following embodiment is not encompassed by the wording of the claims but is considered as useful for understanding the invention.

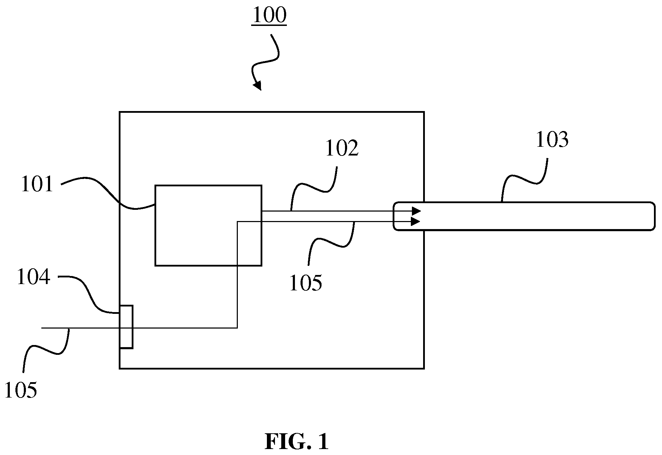

FIG. 1 shows a transmitter 100 according to an embodiment. The transmitter 100 is configured for QKD and is thus a QKD transmitter. The transmitter 100 may be a transceiver.

The transmitter 100 includes a signal generation unit or signal generator 101, which is configured to generate a QKD signal 102, and to output the QKD signal 102 onto a transmission line 103, for instance, onto an optical fiber.

Further, the transmitter 100 includes an input 104, which is configured to receive an optical signal 105 (classical signal) having a different, for example longer, wavelength than the QKD signal 102. The transmitter 100 is further configured to output the optical signal 105 onto the transmission line 103. Notably, the optical signal 105 may be generated in a further (classical) signal generation unit. This further signal generation unit could be a part of the transmitter 100, for instance, for low cost applications when there is no need of high performance (long reach). However, for high performance, for instance long reach, applications, an external signal generation unit may be used to generate the classical optical signal and provide it to the input 104 of the QKD transmitter 100.

Between the input 104 and the transmission line 103 the optical signal 105 is passed through a part of the signal generation unit 101, i.e. through optical components arranged in this part and in the path of the optical signal 105, which does not or not significantly affect the optical signal 105. In other words the optical components of the signal generation unit 101 is transparent to the optical signal.

The following embodiment is not encompassed by the wording of the claims but is considered as useful for understanding the invention.

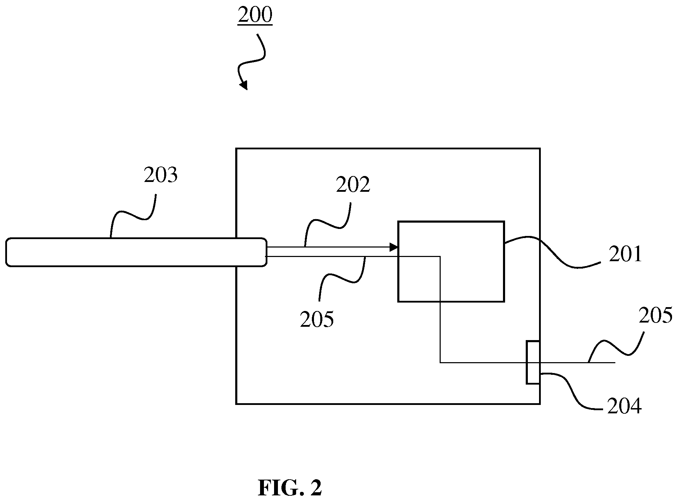

FIG. 2 shows a receiver 200 according to an embodiment of the present invention. The receiver 200 is configured for QKD and is thus a QKD receiver. The receiver 200 may be a transceiver.

The receiver 200 includes a signal receiving unit 201 configured to receive a QKD signal 202 and an optical signal 205 over a transmission line 203, the optical signal 205 having a different, for example longer, wavelength than the QKD signal 202. That is, both signals 202, 205 are transmitted and received over a common transmission line 203, for instance, transmitted over the transmission line 103 by the transmitter 100 of FIG. 1. In this case, the optical signal 205 is the optical signal 105, and the QKD signal 202 is the QKD signal 102.

The receiver 200 includes further an output 204 for the optical signal 205 for outputting it, for instance, to a further (classical) signal receiving unit. This further signal receiving unit may be external to the receiver 200, particularly for high performance applications, but may also be a part of the receiver 200, when lower performance is sufficient.

Between the transmission line 203 and the output 204, the optical signal 205 is passed through a part of the signal receiving unit or signal receiver 201, which is transparent to the optical signal 205. That means, it passes through optical components arranged in this part and in the path of the optical signal 105, which do not or not significantly affect the optical signal 105. In other words the optical components of the signal receiving unit 201 is transparent to the optical signal.

Most generally, a system 300 according to an embodiment includes a transmitter 100 as shown in FIG. 1 and a receiver 200 as shown in FIG. 2, wherein the transmitter 100 and the receiver 200 are connected over at least one transmission line 103 and/or 203.

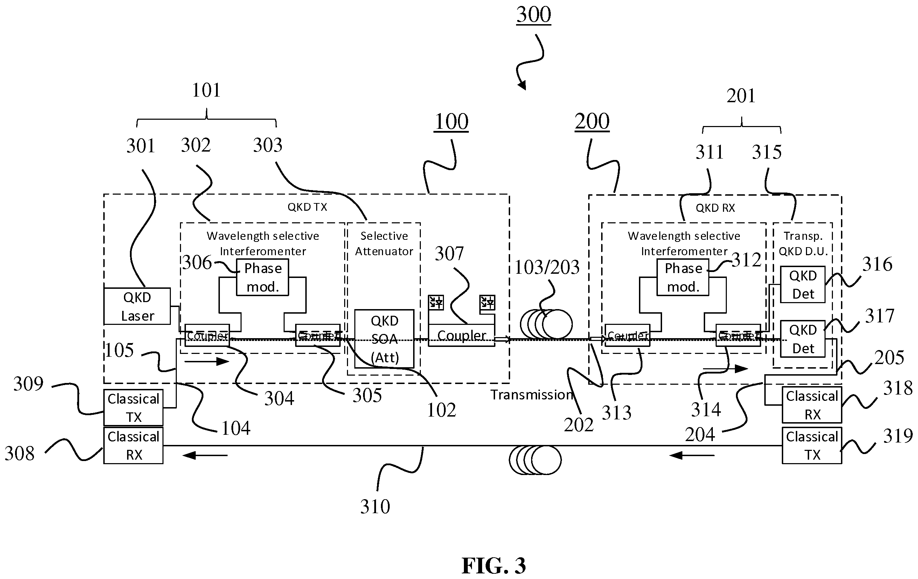

FIG. 3 shows a particular system 300 according to an embodiment, which includes a transmitter 100 that builds on the transmitter 100 shown in FIG. 1 and a receiver 200 that builds on the receiver 200 shown in FIG. 2. Same elements in FIG. 3 and in FIG. 1 and/or FIG. 2 share the same reference signs and functions. The transmitter 100 and receiver 200 shown in FIG. 3 include all elements of the transmitter 100 of FIG. 1 and the receiver 200 of FIG. 2, respectively, even if not explicitly shown in FIG. 3. Further, even if the transmitter 100 and the receiver 200 of Fig. 3 are described as part of a system, these may also be standalone devices, which may be used independently for each other.

The system 300 shown in FIG. 3 combines a Mach-Zehnder interferometer implementation for QKD with a classical communication link. Here, in particular a Discrete Variable (DV) QKD system 300 in a double Mach-Zehnder configuration is illustrated. The applied techniques according to the invention, however, can be used in the same way on other QKD systems.

Accordingly, the transmitter 300 includes a signal generation unit 101 including a QKD laser configured to provide a laser beam 301 for the QKD signal 102, an optical modulation unit 302, and a wavelength-selective attenuator 303.

The laser beam 301 has a different wavelength than the optical signal 105, which is generated by an external (classical) signal generation unit 309, and is received by the transmitter 100 via input 104.

The optical modulation unit 302 is configured to modulate the laser beam 301 to generate the QKD signal 102. However, the optical signal 105 is passed through the optical modulation unit or optical modulator 302, which is transparent to the optical signal 105. Transparency to the optical signal 105 may be for instance obtained by using a first and a second selective coupler 304 and 305 in the optical modulator 302. The first selective coupler 304 and the second selective coupler 305 may be realized for instance, directional couplers, multimode interference (MMI) couplers or optical filters, which passes the classical optical signal only through one arm of the optical modulator 302.

The optical modulator 302 may be implemented as a Mach-Zehnder interferometer. Other interferometers, such as for instance Michelson interferometers, using the same principle may alternatively be used. The behavior may be obtained by exploiting the wavelength dependence of directional couplers, MMIs or even optical filters. In particular due to the wavelength dependence of the optical modulator, the optical signal entering the optical modulator is redirected to pass only through one of the optical paths, while the QKD signal passes through both paths.

The optical modulation unit 302 here includes a first wavelength-selective coupler 304, a phase modulator 306, and optionally a second wavelength selective coupler 305.

The first wavelength-selective coupler 304 is configured to direct a first part of the laser beam 301 to the phase modulator 306 and to pass a second part of the laser beam 301, and the optical signal 105, by the phase modulator 306.

In particular, the optical modulation unit 302 is thus in the shown implementation a wavelength-selective interferometer, which is configured to pass the laser beam 301 through both of its arms - wherein the phase modulator 306 is provided on one of the arms - but the optical signal 105 only through the one of its arms without the phase modulator 306. Thereby, the QKD signal 102 is produced from the laser beam 301.

The second wavelength-selective coupler 305 combines the split laser beam 301 and the optical signal 105 before inputting the light (signals) into the wavelength-selective attenuator 303. The wavelength-selective attenuator 303 is configured to attenuate the QKD signal 102, for instance to quantum level. However, the optical signal 105 is passed through the attenuator 303, which is transparent to the optical signal 105. The attenuator 303 may be a wavelength-selective attenuator implemented with a semiconductor optical amplifier (SOA) or an electro absorption modulator (EAM). The bandgap of the SOA or EAM can be easily selected such that the attenuator does not influence the optical signal used. In particular, the bandgap may be selected to be much larger than the energy that corresponds to the wavelength of the optical signal.

A further coupler 307 may couple the attenuated QKD signal 102 and the optical signal 105 into a transmission line 103, which may be the same as, or may be connected to, the transmission line 203 leading to the receiver 200. The further coupler 307 may be implemented in the same way as the first and second couplers 304, 305 as described above.

The receiver 200 includes a signal receiving unit 201 including an optical demodulation unit 311 and a wavelength-selective detecting unit 315.

The optical demodulation unit or optical demodulator 311 is configured to demodulate the QKD signal 202 (which is here the same as the QKD signal 102). However, the optical signal 205 (which is here the same as the optical signal 105) is passed through the optical demodulation unit 311, which is transparent to the optical signal 205.

Transparency to the optical signal 205 may be for instance obtained by using a first and a second selective coupler 313 and 314 in the optical demodulator 311. The first selective coupler 313 and the second selective coupler 314 may be realized for instance, by directional couplers, multimode interference (MMI) couplers or optical filters, which passes the classical optical signal only through one arm of the optical demodulator 311.

The optical demodulator 311 may be implemented as a Mach-Zehnder interferometer. Other interferometers, such as for instance Michelson interferometers, using the same principle may alternatively be used. The behavior may be obtained by exploiting the wavelength dependence of directional couplers, MMIs or even optical filters. In particular due to the wavelength dependence of the optical modulator, the optical signal entering the optical modulator is redirected to pass only through one of the optical paths, while the QKD signal passes through both paths.

The optical demodulation unit 311 here includes a first wavelength-selective coupler 313, a phase modulator 312, and optionally a second wavelength selective coupler 314. The first wavelength-selective coupler 313 is configured to direct a first part of the QKD signal 202 to the phase modulator 312 and to pass a second part of the QKD signal 202, and the optical signal 205, by the phase modulator 312, i.e. straight to the second wavelength selective coupler 314 without passing through the phase modulator 312.

In particular, the optical demodulation unit 311 is thus in this implementation a wavelength-selective interferometer, which is configured to pass the QKD signal 202 through both of its arms - wherein the phase modulator 312 is provided on one of the arms - but the optical signal 205 only through the one of its arms without the phase modulator 312. Thereby, the QKD signal 202 is demodulated.

The second wavelength-selective coupler 314 optionally combines the split QKD signal 202 and the optical signal 205, before inputting the light (signals) into the wavelength-selective detecting unit 315. The wavelength-selective detecting unit 315 is configured to detect the QKD signal 202. However, the optical signal 105 is passed through the detecting unit 315, which is transparent to the optical signal 105. The detecting unit 315 may particularly include two QKD detectors 316 and 317, wherein the coupler 314 splits the QKD signal 202 (after first combining the QKD signal) to the two QKD detectors 316 and 317, while it provides the optical signal 205 only to one of the QKD detectors 317, which is transparent for the optical signal 205. The optical signal 205 may thus pass via an output 204 to a classical detecting unit 318.

FIG. 3 shows also that at the transmitter side 100 of the system, the system 300 may further include a classical receiver 308, and may further include a classical transmitter 319 at the receiver 200 side of the system. The classical receiver 308 and transmitter 319 may communicate over another transmission line 310.

In the above-described manner, the described optics for the QKD transmitter 100 and QKD receiver 200 are transparent to the classical optical signal 105/205. As a result, the system 300 performance is similar to that of a QKD system without classical link. The system 300 of FIG. 3 is thus an example for a full and efficient QKD system with a classical link superimposed.

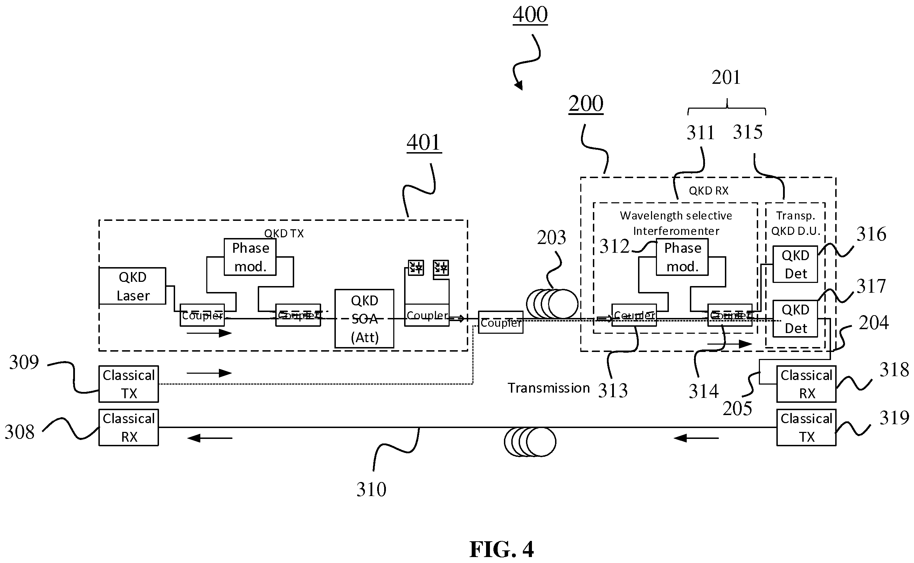

FIG. 4 shows a system 400 that differs from the system 300 shown in FIG. 3 only on the transmitter side. Accordingly, the system 400 also includes a receiver 200 as shown in FIG. 3, which receiver 200 builds on the receiver 200 shown in FIG. 2. Same elements in FIG. 4 and in FIG. 2 or FIG. 3 have same reference signs, function likewise, and are thus not be described again at this point. Also for this embodiment, even if the transmitter 100 and the receiver 200 of Fig. 3 are described as part of a system, these may also be standalone devices, which may be used independently for each other.

As the QKD signal loss is not as critical on the transmitter side as on the receiver side, the system 400 is a simplified version of the system 300. The system 400 includes a transmitter 401 that uses conventional optics, while the optical signal 105/205 only passes through the optics used for the QKD signal 202 at the receiver 200. Such system 400 still shows improved performance over a conventional system in which QKD signal and optical signal are transmitted over the same transmission line.

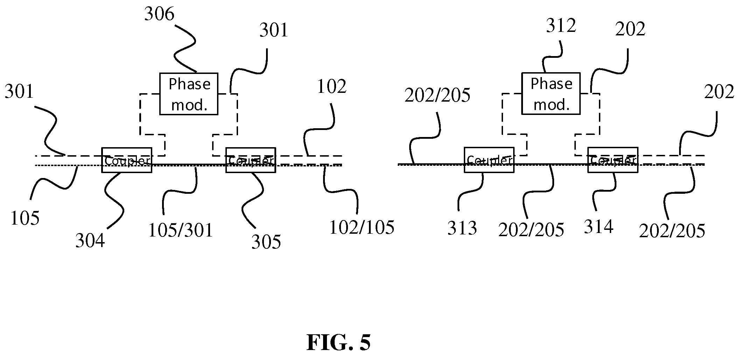

FIG. 5 shows components for a system 300 according to an embodiment. In particular, FIG. 5 shows the wavelength-selective interferometer including the coupler 304, the coupler 305 and the phase modulator 306, as it is used in the transmitter 100 shown in FIG. 3. Further, FIG. 5 shows the wavelength-selective interferometer including the coupler 313, the coupler 314 and the phase modulator 312, as it is used in the receiver 200 shown in FIG. 3. Also for this embodiment, even if the transmitter 100 and the receiver 200 of Fig. 3 are described as part of a system, these may also be standalone devices, which may be used independently for each other.

The components shown in FIG. 3 selectively affect only the QKD signal 102/202, but not the classical optical signal 105/205. A possible implementation is as a Mach-Zehnder interferometer with, for instance, directional couplers or multimode interference (MMI) couplers, which pass the classical optical signal 105/205 only through one arm of the interferometer. At least the couplers 304 and 313 selectively split only the QKD signal 102/202 to both of their outputs, while the classical optical signal 105/205 is passed to one output only. In the transmitter 100, such a coupler 304 can simultaneously perform wavelength multiplexing of the classical optical and the QKD signal 105 and 102.

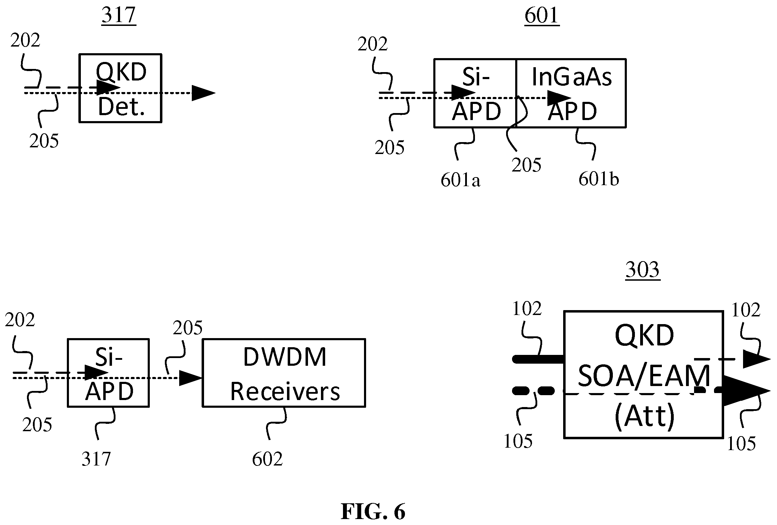

FIG. 6 shows further components for a system 300 according to an embodiment of the invention. In particular, FIG. 6 shows the QKD detector 317 of the receiver 200 shown in FIG. 3, which detects the QKD signal 202 but passes through the optical signal 205. It thus acts also as a demultiplexer for the optical signal 205 and QKD signal 202. The optical signal 205 could then be detected in any following detector or receiver. For instance, for higher rate systems (100Gbit/s, 400 Gbit/s, etc.), a complex Dense Wavelength Division Multiplexing (DWDM receiver) structure 602 may be used to detect the optical signal 205 after the QKD detector 317. Thereby, the DWDM receiver 602 maybe external to the receiver 200 (as shown in Fig. 3) or included in the receiver 200.

In another advantageous implementation, a detector stack 600 made of a Si detector 601a stacked with an InGaAs detector 601b (in this example both are APDs) could be used to realize the QKD detector 317 in FIG. 3. In this way, both signals 202, 205 could be detected in the receiver 200 in a very compact manner.

FIG. 6 shows further a wavelength-selective attenuator 303 as used in the transmitter 100 shown in FIG. 3. The wavelength-selective attenuator 303 may be a SOA or EAM configured to selectively attenuate the QKD signal 102 (symbolized by the top arrow) while leaving the classical signal 105 undisturbed (symbolized by the bottom arrow).

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Transmitter (100) for Quantum Key Distribution, QKD, the transmitter (100) comprising
a signal generation unit (101) configured to generate a QKD signal (102) and to output it onto a transmission line (103), and
an input (104) configured to receive an optical signal (105) having a different wavelength than the QKD signal (102), the optical signal (105) being output onto the transmission line (103),
wherein between the input (104) and the transmission line (103) the optical signal (105) is passed through a part of the signal generation unit (101), which is transparent to the optical signal (105),
wherein at least one of:
the signal generation unit (101) includes a wavelength-selective attenuator (303) configured to attenuate the QKD signal (102), and the optical signal (105) is passed through the attenuator (303), which is transparent to the optical signal (105); and
the signal generation unit (101) includes an optical modulation unit (302) configured to modulate a laser beam (301) to generate the QKD signal (102), and the optical signal (105) is passed through the optical modulation unit (302), which is transparent to the optical signal (105),
wherein the optical modulation unit (302) includes a wavelength-selective interferometer configured to pass the laser beam (301) through both of its arms but the optical signal (105) only through one of its arms, and/or
wherein the optical modulation unit (302) includes a phase modulator (306) and a wavelength-selective coupler (304), and the wavelength-selective coupler (304) is configured to direct a first part of the laser beam (301) to the phase modulator (306) and to pass a second part of the laser beam (301) and the optical signal (105) by the phase modulator (306).

2. Transmitter (100) according to claim 1, wherein
the wavelength-selective coupler (304) is a directional coupler or a multimode interference coupler.

3. Transmitter (100) according to claim 1 or 2, wherein
the wavelength-selective attenuator (303) is a semiconductor optical amplifier or an electro absorption modulator.

4. Receiver (200) for Quantum Key Distribution, QKD, the receiver (200) comprising
a signal receiving unit (201) configured to receive a QKD signal (202) and an optical signal (205) over a transmission line (203), the optical signal (205) having a different wavelength than the QKD signal (202), and
an output (204) for the optical signal (205),
wherein between the transmission line (203) and the output (204), the optical signal (205) is passed through a part of the signal receiving unit (201), which is transparent to the optical signal (205), and
wherein at least one of:
the signal receiving unit (201) includes a wavelength-selective detecting unit (315) configured to detect the QKD signal (202), and the optical signal (205) is passed through at least a part of the detecting unit (315), which is transparent to the optical signal (205); and
the signal receiving unit (201) includes an optical demodulation unit (311) configured to demodulate the QKD signal (202), and the optical signal (205) is passed through the optical demodulation unit (311), which is transparent to the optical signal (205),
wherein the optical demodulation unit (311) includes a wavelength-selective interferometer configured to pass the QKD signal (202) through both of its arms but the optical signal (205) only through one of its arms, and/or
wherein the optical demodulation unit (311) includes a phase modulator (312) and a wavelength-selective coupler (313), and the wavelength-selective coupler (313) is configured to direct a first part of the QKD signal (202) to the phase modulator (312) and to pass a second part of the QKD signal (202) and the optical signal (205) by the phase modulator (312).

5. Receiver (200) according to claim 4, wherein
the wavelength-selective detecting unit includes a detector stack (601) made of a first detector (601a), which is configured to detect the QKD signal (202) but is transparent to the optical signal (105), and a second detector (601b), which is configured to detect the optical signal (205).

6. System (300) for Quantum Key Distribution, QKD, the system (300) comprising
a transmitter (100) according to one of the claims 1 to 3,
a receiver (200) according to one of the claims 4 to 6,
wherein the transmitter (100) and the receiver (200) are connected over the transmission line (103, 203).

7. System (300) according claim 6, wherein
the QKD signal (102, 202) has a shorter wavelength, for example of 800-1400 nm, and the optical signal (105, 205) has a longer wavelength, for example of 1200-1700 nm.

## Patentansprüche

1. Sender (100) für Quantenschlüsselverteilung, QKD, wobei der Sender (100) Folgendes umfasst:
eine Signalerzeugungseinheit (101), die dazu konfiguriert ist, ein QKD-Signal (102) zu erzeugen und auf eine Übertragungsleitung (103) auszugeben, und
einen Eingang (104), der dazu konfiguriert ist, ein optisches Signal (105) zu empfangen, das eine andere Wellenlänge als das QKD-Signal (102) aufweist, wobei das optische Signal (105) auf die Übertragungsleitung (103) ausgegeben wird,
wobei das optische Signal (105) zwischen dem Eingang (104) und der Übertragungsleitung (103) durch einen Teil der Signalerzeugungseinheit (101) geleitet wird, der für das optische Signal (105) transparent ist,
wobei mindestens eine:
der Signalerzeugungseinheit (101) einen wellenlängenselektiven Abschwächer (303) beinhaltet, der dazu konfiguriert ist, das QKD-Signal (102) abzuschwächen, und das optische Signal (105) durch den Abschwächer (303) geleitet wird, der für das optische Signal (105) transparent ist; und
der Signalerzeugungseinheit (101) eine optische Modulationseinheit (302) beinhaltet, die dazu konfiguriert ist, einen Laserstrahl (301) zu modulieren, um das QKD-Signal (102) zu erzeugen, und das optische Signal (105) durch die optische Modulationseinheit (302) geleitet wird, die für das optische Signal (105) transparent ist,
wobei die optische Modulationseinheit (302) ein wellenlängenselektives Interferometer beinhaltet, das dazu konfiguriert ist, den Laserstrahl (301) durch beide seiner Arme zu leiten, das optische Signal (105) jedoch nur durch einen seiner Arme, und/oder
wobei die optische Modulationseinheit (302) einen Phasenmodulator (306) und einen wellenlängenselektiven Koppler (304) beinhaltet und der wellenlängenselektive Koppler (304) dazu konfiguriert ist, einen ersten Teil des Laserstrahls (301) zu dem Phasenmodulator (306) zu lenken und einen zweiten Teil des Laserstrahls (301) und das optische Signal (105) an dem Phasenmodulator (306) vorbeizuleiten.

2. Sender (100) nach Anspruch 1, wobei
der wellenlängenselektive Koppler (304) ein Richtkoppler oder ein Multimode-Interferenzkoppler ist.

3. Sender (100) nach Anspruch 1 oder 2, wobei
der wellenlängenselektive Abschwächer (303) ein optischer Halbleiterverstärker oder ein Elektroabsorptionsmodulator ist.

4. Empfänger (200) für Quantenschlüsselverteilung, QKD, wobei der Empfänger (200) Folgendes umfasst:
eine Signalempfangseinheit (201), die dazu konfiguriert ist, ein QKD-Signal (202) und ein optisches Signal (205) über eine Übertragungsleitung (203) zu empfangen, wobei das optische Signal (205) eine andere Wellenlänge als das QKD-Signal (202) aufweist, und
einen Ausgang (204) für das optische Signal (205),
wobei das optische Signal (205) zwischen der Übertragungsleitung (203) und dem Ausgang (204) durch einen Teil der Signalempfangseinheit (201) geleitet wird, der für das optische Signal (205) transparent ist, und
wobei mindestens eine:
der Signalempfangseinheit (201) eine wellenlängenselektive Detektionseinheit (315) beinhaltet, die dazu konfiguriert ist, das QKD-Signal (202) zu detektieren, und das optische Signal (205) durch mindestens einen Teil der Detektionseinheit (315) geleitet wird, der für das optische Signal (205) transparent ist; und
der Signalempfangseinheit (201) eine optische Demodulationseinheit (311) beinhaltet, die dazu konfiguriert ist, das QKD-Signal (202) zu demodulieren, und das optische Signal (205) durch die optische Demodulationseinheit (311) geleitet wird, die für das optische Signal (205) transparent ist,
wobei die optische Demodulationseinheit (311) ein wellenlängenselektives Interferometer beinhaltet, das dazu konfiguriert ist, das QKD-Signal (202) durch beide seiner Arme zu leiten, das optische Signal (205) jedoch nur durch einen seiner Arme, und/oder
wobei die optische Demodulationseinheit (311) einen Phasenmodulator (312) und einen wellenlängenselektiven Koppler (313) beinhaltet und der wellenlängenselektive Koppler (313) dazu konfiguriert ist, einen ersten Teil des QKD-Signals (202) zu dem Phasenmodulator (312) zu lenken und einen zweiten Teil des QKD-Signals (202) und das optische Signal (205) an dem Phasenmodulator (312) vorbeizuleiten.

5. Empfänger (200) nach Anspruch 4, wobei
die wellenlängenselektive Detektionseinheit einen Detektorstapel (601) beinhaltet, der aus einem ersten Detektor (601a), der dazu konfiguriert ist, das QKD-Signal (202) zu detektieren, jedoch für das optische Signal (105) transparent ist, und einem zweiten Detektor (601b), der dazu konfiguriert ist, das optische Signal (205) zu detektieren, hergestellt ist.

6. System (300) für Quantenschlüsselverteilung, QKD, wobei das System (300) Folgendes umfasst:
einen Sender (100) nach einem der Ansprüche 1 bis 3,
einen Empfänger (200) nach einem der Ansprüche 4 bis 6,
wobei der Sender (100) und der Empfänger (200) über die Übertragungsleitung (103, 203) verbunden sind.

7. System (300) nach Anspruch 6, wobei
das QKD-Signal (102, 202) eine kürzere Wellenlänge, beispielsweise von 800-1400 nm, aufweist und das optische Signal (105, 205) eine längere Wellenlänge, beispielsweise von 1200-1700 nm, aufweist.

## Revendications

1. Émetteur (100) pour la distribution de clés quantiques, QKD, l'émetteur (100) comprenant
une unité de génération de signal (101) configurée pour générer un signal QKD (102) et pour le délivrer sur une ligne de transmission (103), et
une entrée (104) configurée pour recevoir un signal optique (105) ayant une longueur d'onde différente de celle du signal QKD (102), le signal optique (105) étant délivré sur la ligne de transmission (103),
dans lequel entre l'entrée (104) et la ligne de transmission (103) le signal optique (105) passe à travers une partie de l'unité de génération de signal (101), qui est transparente au signal optique (105),
dans lequel au moins l'un des éléments suivants :
l'unité de génération de signal (101) comporte un atténuateur sélectif en longueur d'onde (303) configuré pour atténuer le signal QKD (102), et le signal optique (105) passe à travers l'atténuateur (303), qui est transparent au signal optique (105) ; et
l'unité de génération de signal (101) comporte une unité de modulation optique (302) configurée pour moduler un faisceau laser (301) pour générer le signal QKD (102), et le signal optique (105) passe à travers l'unité de modulation optique (302), qui est transparente au signal optique (105),
dans lequel l'unité de modulation optique (302) comporte un interféromètre sélectif en longueur d'onde configuré pour faire passer le faisceau laser (301) à travers ses deux bras mais le signal optique (105) uniquement à travers l'un de ses bras, et/ou
dans lequel l'unité de modulation optique (302) comporte un modulateur de phase (306) et un coupleur sélectif en longueur d'onde (304), et le coupleur sélectif en longueur d'onde (304) est configuré pour diriger une première partie du faisceau laser (301) vers le modulateur de phase (306) et pour faire passer une seconde partie du faisceau laser (301) et le signal optique (105) par le modulateur de phase (306).

2. Émetteur (100) selon la revendication 1, dans lequel
le coupleur sélectif en longueur d'onde (304) est un coupleur directionnel ou un coupleur d'interférence multimode.

3. Émetteur (100) selon la revendication 1 ou 2, dans lequel l'atténuateur sélectif en longueur d'onde (303) est un amplificateur optique à semi-conducteur ou un modulateur d'électro-absorption.

4. Récepteur (200) pour distribution de clé quantique, QKD, le récepteur (200) comprenant
une unité de réception de signal (201) configurée pour recevoir un signal QKD (202) et un signal optique (205) sur une ligne de transmission (203), le signal optique (205) ayant une longueur d'onde différente de celle du signal QKD (202), et
une sortie (204) pour le signal optique (205),
dans lequel entre la ligne de transmission (203) et la sortie (204), le signal optique (205) passe à travers une partie de l'unité de réception de signal (201), qui est transparente au signal optique (205), et
dans lequel au moins l'un des éléments suivants :
l'unité de réception de signal (201) comporte une unité de détection sélective de longueur d'onde (315) configurée pour détecter le signal QKD (202), et le signal optique (205) passe à travers au moins une partie de l'unité de détection (315), qui est transparente au signal optique (205) ; et
l'unité de réception de signal (201) comporte une unité de démodulation optique (311) configurée pour démoduler le signal QKD (202), et le signal optique (205) passe à travers l'unité de démodulation optique (311), qui est transparente au signal optique (205),
dans lequel l'unité de démodulation optique (311) comporte un interféromètre sélectif en longueur d'onde configuré pour faire passer le signal QKD (202) à travers ses deux bras mais le signal optique (205) uniquement à travers l'un de ses bras, et/ou dans lequel l'unité de démodulation optique (311) comporte un modulateur de phase (312) et un coupleur sélectif en longueur d'onde (313), et le coupleur sélectif en longueur d'onde (313) est configuré pour diriger une première partie du signal QKD (202) vers le modulateur de phase (312) et pour faire passer une seconde partie du signal QKD (202) et le signal optique (205) par le modulateur de phase (312).

5. Récepteur (200) selon la revendication 4, dans lequel
l'unité de détection sélective en longueur d'onde comporte une pile de détecteurs (601) constituée d'un premier détecteur (601a), qui est configuré pour détecter le signal QKD (202) mais est transparent au signal optique (105), et d'un second détecteur (601b), qui est configuré pour détecter le signal optique (205).

6. Système (300) de distribution de clés quantiques, QKD, le système (300) comprenant
un émetteur (100) selon l'une quelconque des revendications 1 à 3,
un récepteur (200) selon l'une des revendications 4 à 6,
dans lequel l'émetteur (100) et le récepteur (200) sont connectés via la ligne de transmission (103, 203).

7. Système (300) selon la revendication 6, dans lequel
le signal QKD (102, 202) a une longueur d'onde plus courte, par exemple de 800-1400 nm, et le signal optique (105, 205) a une longueur d'onde plus longue, par exemple de 1200-1700 nm.
